# EUROPEAN PATENT APPLICATION

(11) **EP 4 477 050 A1**
(43) Date of publication of application: **18.12.2024**
(21) Application number: 24180591.0
(22) Date of filing: 06.06.2024
(51) Int. Cl.: A01F 12/44

(54) **GRAIN PROCESSING APPARATUS OF A COMBINE HARVESTER**

(30) Priority: 12.06.2023 US 202363507629 P
(71) Applicant: Agco Corporation, Duluth, Georgia 30096 (US)
(72) Inventor: REGIER, Bernard, Hesston, 67062 (US); GLEASON, Tyler Thomas, Hesston, 67062 (US); REINECKE, Clay, Hesston, 67062 (US); ROMERE, Luca, 36042 Breganze (IT)
(74) Representative: AGCO Intellectual Property Department

(57) **Abstract**

The present invention relates to a grain processing apparatus (40) for a combine harvester (10) having a threshing system (20) and a separating system (30) downstream of the threshing system. The separating system comprises a rotor (22) and a separator grate (24). A cover (90) is provided against the separator grate, at a side of the separator grate opposite to the rotor. The cover is a slide fit at one end and has a locking arrangement (94) at the other end, such that the cover can be slid into place then locked in a closed position against the separator grate, or unlocked and removed. When closed, the cover blocks the flow of material to a cleaning system (40) of the combine harvester in order to reduce the loss suffered at the cleaning system.

## Description

### FIELD

Embodiments of the present disclosure relate generally to combine harvesters, and in particular to the grain separating and grain cleaning system of the combine harvester.

### BACKGROUND

A combine harvester typically includes a threshing system for detaching grains of cereal from the ears of cereal, a separating apparatus downstream of the threshing system, and a grain cleaning apparatus for receiving grain from the separating apparatus.

There are various designs for the threshing system and for the separating apparatus (e.g., axial or transverse) as well as for the grain cleaning apparatus. However, in all designs, there is a flow of material from the threshing system to the separating apparatus, and between the separating apparatus and the grain cleaning unit, in particular from a stratification pan to the grain cleaning unit. The flow can either pass from the stratification pan directly to the grain cleaning unit or there may be an intermediate cascade pan between the stratification pan and the grain cleaning unit.

The threshing system and separating apparatus typically comprise threshing rotors that rotate with respect to concave gratings (known simply as "concaves"). As mentioned above, the rotors may be arranged transversally or longitudinally with respect to the direction of travel of the combine harvester. The distance between the concaves and the rotors is typically adjustable, so that the threshing system may be configured for different crop types and harvesting conditions.

For good performance, a combine should separate sufficient grain but not separate too much MOG into the cleaning system. However, there is a compromise between the effectiveness of the separation of grain and the amount of MOG which has to be processed by the cleaning system. A preferred balance may depend on the harvesting conditions.

It is known to provide a set of interchangeable concave segments of different designs to cater for these different harvest conditions. For example, less aggressive concaves may be utilized for harvesting corn to reduce grain damage. The concaves may also be configurable to adjust the open area through which grain can fall so as to change the longitudinal or transverse distribution of material falling onto to the underlying cleaning system. However, the use of multiple concave sets is costly and cumbersome with the need to transport and/or store the redundant concaves when not in use. Moreover, the concaves are heavy and the act of interchanging between the different sets typically requires significant downtime.

There is therefore a need for a system that enables a simpler adjustment of a setting of the grain processing system.

### BRIEF SUMMARY

The invention is defined by the claims. According to examples in accordance with a first aspect of the invention, there is provided a grain processing apparatus for a combine harvester, comprising:
a threshing system;
a separating system downstream of the threshing system, wherein the separating system comprises a rotor and a separator grate,
wherein the separating system further comprises:
a cover against the separator grate, at a side of the separator grate opposite to the rotor, wherein the cover is a slide fit to a support at one end and has a locking arrangement at the other end, such that the cover can be locked in position against the separator grate or unlocked and removed.

This system enables the flow of material from a separating system of a combine harvester (which would normally then pass to the cleaning system of the combine harvester) to be blocked. This reduces the amount of MOG reaching the cleaning system for times when it is becoming clogged with MOG. If, instead, additional MOG can be accepted, to improve the effectiveness of seed separation, the cover can be easily and quickly removed .

The use of a cover which slides into place at one end and locks into place at the other end enables a simple reconfiguration to be performed by the operator of the combine harvester.

The invention is of particular interest for multi-crop combine harvesters, which are used to harvest a lot of different crops. Sometimes the crop is easy to thresh and separate with a small amount of MOG. An example of this is dry corn. When harvesting a high yielding low MOG crop like dry corn, the separation area of the processor can be maintained mostly or fully open to allow allow the crop to filter out of the processor with large quantities.

At other times, or for other crops, the crop has a large amount of MOG (like some small grains) and a large amount of MOG is thereby introduced to the cleaning system of the combine which makes it difficult for the cleaning system to sift the grain out of the MOG grain mixture.

The invention makes it very easy for the combine operator to cover some of the separator part of the processor and limit the amount of MOG reaching the cleaning system so the cleaning system can work efficiently. The removable cover thus enables a correct balance to be found between grain loss and MOG production. If the processor has low grain loss but high MOG production, the cleaning system suffers because it cannot sift the grain out and therefore the cleaning system has large grain loss. By limiting the MOG escaping the processor using the removable cover, the cleaning system has less MOG to process and can sift the grain out effectively and limit cleaning system loss.

The locking arrangement for example comprises a latch. Thus, it can simply be pushed closed (rocking about the opposite end) and then locks into place.

In one set of examples, the threshing system and the separating system comprise an axial flow system. Thus, the invention may be applied to an axial combine.

In another set of examples, the threshing system comprises at least one tangential flow rotor and associated concave. The separating system for example comprises an axial flow rotor. Thus, the grain processing is for example for use in a hybrid machine.

The grain processing apparatus for example further comprises a return pan for receiving harvested crop material from the separating system and for delivering the harvested crop material to a grain cleaning system, wherein the grain cleaning system comprises:
a stratification pan for receiving the harvested crop material from a front end of the return pan and from the threshing system;
a sieve arrangement for receiving the harvested crop material from a rear end of the stratification pan; and
a fan for providing an air flow to an area between a rear end of the stratification pan and the sieve arrangement.

The sieve arrangement for example comprises:
a chaffer sieve for conveying harvested crop material in a generally rearward direction; and
a lower sieve,
and wherein the grain cleaning apparatus comprises a clean grain chute below the lower sieve.

The grain cleaning system for example further comprises a second chute for directing tailings to a tailings collection trough.

The grain cleaning system for example further comprises a cascade pan between the stratification pan and the sieve arrangement. This may be used to further assist separation of the grain and MOG.

The invention also provides a combine harvester comprising:
a crop cutting head; and
the grain processing apparatus as defined above.

### BRIEF DESCRIPTION OF THE DRAWINGS

One or more embodiments of the invention / disclosure will now be described, by way of example only, with reference to the accompanying drawings, in which:
FIG. 1 shows a combine harvester which may be adapted in accordance with the invention;
FIG. 2 shows one example of threshing system and grain cleaning apparatus in more detail;
FIG. 3 shows the shows a modification to the separating apparatus, with a fitted cover; and
FIG. 4 shows the separating apparatus of FIG. 3 with a cover in the process of being fitted or removed; and
FIG. 5 shows another view of the separating apparatus.

### DETAILED DESCRIPTION

The invention will be described with reference to the Figures

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

This disclosure relates to a grain processing apparatus for a combine harvester with a threshing system and a separating system downstream of the threshing system. The separating system comprises a rotor and a separator grate. A cover is provided against the separator grate, at a side of the separator grate opposite to the rotor. The cover is a slide fit at one end and has a locking arrangement at the other end, such that the cover can be slid into place then locked in a closed position against the separator grate, or unlocked and removed. When closed, the cover blocks the flow of material to a cleaning system of the combine harvester in order to reduce the loss suffered at the cleaning system.

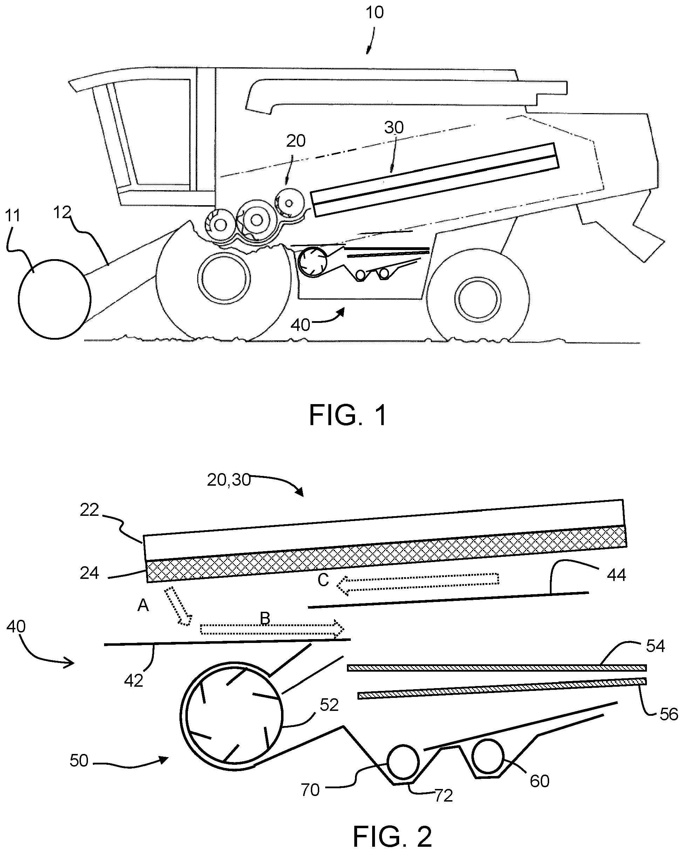

FIG. 1 shows a known combine harvester 10 to which the invention may be applied. A crop cutting head 11 (known as the header) for example comprises a wide laterally extending transverse auger, which cuts the crop material and drives it inwardly towards a central area. A front elevator housing 12 receives the cut crop material and includes a feederhouse for transporting the crop material.

The feederhouse delivers the crop material to a threshing system 20 for detaching grains of cereal from the ears of cereal, and a separating apparatus 30 which is connected downstream of the threshing system 20. The threshing system comprises one or more threshing units, in particular rotors, and associated concaves.

In the example shown, the threshing system 20 is a tangential-flow 'conventional' threshing system, i.e. formed by rotating elements with an axis of rotation in the side-to-side direction of the combine harvester and for generating a tangential flow. For example, the 'conventional' threshing system includes a rotating, tangential-flow, threshing cylinder and a concave-shaped grate. The threshing cylinder includes rasp bars (not shown) which act upon the crop stream to thresh the grain or seeds from the remaining material, the majority of the threshed grain passing through the underlying grate and onto a stratification pan (also sometimes known as the grain pan).

The separating apparatus 30 in this example comprises an axial rotor (i.e. with an axis of rotation generally along the fore-aft direction of the combine, more specifically perpendicular to a lateral direction of the combine). FIG. 1 thus shows a so-called hybrid design, with tangential flow threshing and axial separation. The grains after separation by the separating device 30 pass to a grain cleaning apparatus 40.

There are also axial threshing systems, i.e. formed by rotating elements with an axis of rotation in the longitudinal direction (direction of travel). For example, the threshing section may have axially-aligned rasp bars spaced around the front section whilst the separating section has separating elements or fingers arranged in a pattern, e.g. a spiral pattern, extending from the rasp bars to the rear of the rotor.

An axial threshing and separating system 20,30 is shown in FIG. 2, together with a cleaning apparatus 40.

The threshing and separating system 20,30 comprises an axial rotor 22 beneath which is mounted the concave 24. The concave may have different sections along its length, and the first section to receive the crop material (to the left in FIG. 2) may have a releasable concave, or else the whole length of the concave may be releasable. The separating function involves conveying the crop stream rearwardly in a ribbon passing along a spiral path.

The initial threshing creates a flow of grain to a stratification pan 42. The separating function further downstream of the threshing and separating system serves to separate further grain from the crop stream and this separated grain passes through a grate-like structure onto an underlying return pan 44. The residue crop material, predominantly made up of straw, exits the machine at the rear. Although not shown in FIG. 1, a straw spreader and/or chopper may be provided to process the straw material as required.

The threshing and separating apparatus 20,30 does not remove all material other than grain, "MOG", from the grain so that the crop stream collected by the stratification pan 42 and return pan 44 typically includes a proportion of straw, chaff, tailings and other unwanted material such as weed seeds, bugs, and tree twigs. The remainder of the grain cleaning apparatus 40 is in the form of a grain cleaning unit 50. The grain cleaning unit 50 removes this unwanted material thus leaving a clean sample of grain to be delivered to the tank.

The grain cleaning unit 50 comprises a fan unit 52 and sieves 54 and 56. The upper sieve 54 is known as the chaffer.

The stratification pan 42 and return pan 44 are driven in an oscillating manner to convey the grain and MOG accordingly. Although the drive and mounting mechanisms for the stratification pan 42 and return pan 44 are not shown, it should be appreciated that this aspect is well known in the art of combine harvesters and is not critical to disclosure of the invention. Furthermore, it should be appreciated that the two pans 42, 44 may take a ridged construction as is known in the art.

The general flow of material is as follows. The grain passing through the concave 24 falls onto the front of stratification pan 42 as indicated by arrow A in FIG. 2. This material is conveyed rearwardly (in the direction of arrow B in FIG. 2) by the oscillating motion of the stratification pan 42 and the ridged construction thereof. Material passing through the concave further back falls onto the return pan 44 and is conveyed forwardly by the oscillating motion and ridged construction thereof as shown by arrow C.

It is noted that "forwardly" and "rearwardly" refer to direction relative to the normal forward direction of travel of the combine harvester.

When the material reaches a front edge of the return pan 44 it falls onto the stratification pan 42 and is conveyed as indicated by arrow B.

The combined crop streams thus progress rearwardly towards a rear edge of the stratification pan 42. Whilst conveyed across the stratification pan 42, the crop stream, including grain and MOG, undergoes stratification wherein the heavier grain sinks to the bottom layers adjacent stratification pan 42 and the lighter and/or larger MOG rises to the top layers.

Upon reaching the rear edge of the stratification pan 42, the crop stream falls onto the chaffer 54 which is also driven in a fore-and-aft oscillating motion. The chaffer 54 is of a known construction and includes a series of transverse ribs or louvers which create open channels or gaps therebetween. The chaffer ribs are angled upwardly and rearwardly so as to encourage MOG rearwardly whilst allowing the heavier grain to pass through the chaffer onto an underlying second sieve 56.

The chaffer 54 is coarser (with larger holes) than second sieve 56. Grain passing through chaffer 54 is incident on the lower sieve 56 which is also driven in an oscillating manner and serves to remove tailings from the stream of grain before being conveyed to on-board tank (not shown) by grain collecting auger 70 which resides in a transverse trough 70 at the bottom of the grain cleaning unit 50. Tailings blocked by sieve 56 are conveyed rearwardly by the oscillating motion thereof to a rear edge from where the tailings are directed to the returns auger 60 for reprocessing in a known manner.

This disclosure relates to the design of the separating system, and in particular it relates to a function for blocking some of flow from the separating apparatus to prevent it from being delivered to the cleaning system 50.

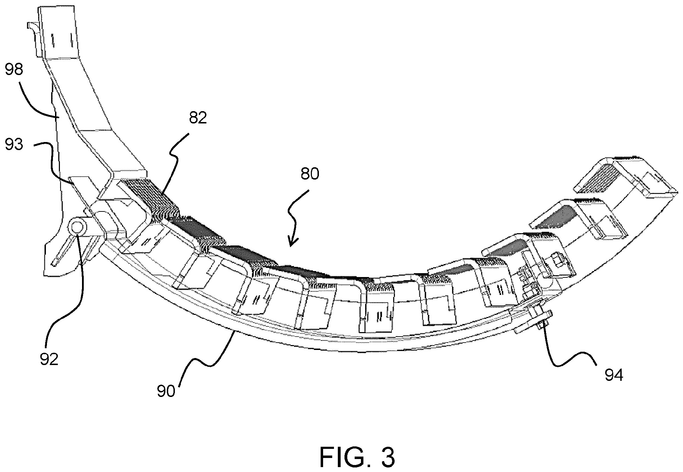

FIG. 3 shows a separator grate 80 (i.e., concave) of the separating system 30. It has an arcuate shape to match the shape of the rotor. The separator grate 80 has a set of fingers 82 which extend in a tangential i.e. circumferential direction, hence across the general direction of flow of material, which is parallel to the axis of rotation of the rotor (i.e. the axis about which the separator grate is curved). The fingers are arranged in rows, wherein the rows extend along the axial direction. The fingers are spaced apart and extend parallel to one another. Gaps between adjacent pairs of the fingers are for the passage of separated grain.

A cover 90 is provided against the separator grate, at a side of the separator grate opposite to the rotor.

The cover 90 is a slide fit at one end over a mounting bar 92 which is part of the frame 98 of the combine harvester. A lip 93 of the cover slides over the mounting bar 92. Note that the "ends" of the cover are at spaced angular positions around the rotors, i.e., the end-to-end length direction of the covers may be considered to be a circumferential direction around the axis of rotation of the rotors.

The mounting bar also supports the separator grate. The mounting bar 92 extends parallel to the rotor axis of rotation. The cover is slid over the mounting bar 92 at one end and then can be pushed closed against the separator grate. A locking arrangement at the opposite end to the mounting bar locks the cover in a closed state. The closed state is shown in FIG. 3.

The cover 90 has a locking arrangement 94 at the end opposite to the lip 93. The cover can thus be locked into its closed state and this prevents the lip 93 being able to pass over the mounting bar 92. The locking arrangement can then be unlocked so the cover can be opened and slid out from beneath the separator grate when desired.

The locking arrangement preferably comprises a latch so that the action of closing the cover automatically locks it into its closed state.

As harvest conditions change, an operator may choose to selectively fit the cover (or all of the covers if there are more than one, or a subset of the covers if there are more than one), in order to limit the amount of MOG reaching the cleaning system so the cleaning system can work efficiently. A correct balance can then be found between grain loss and MOG production.

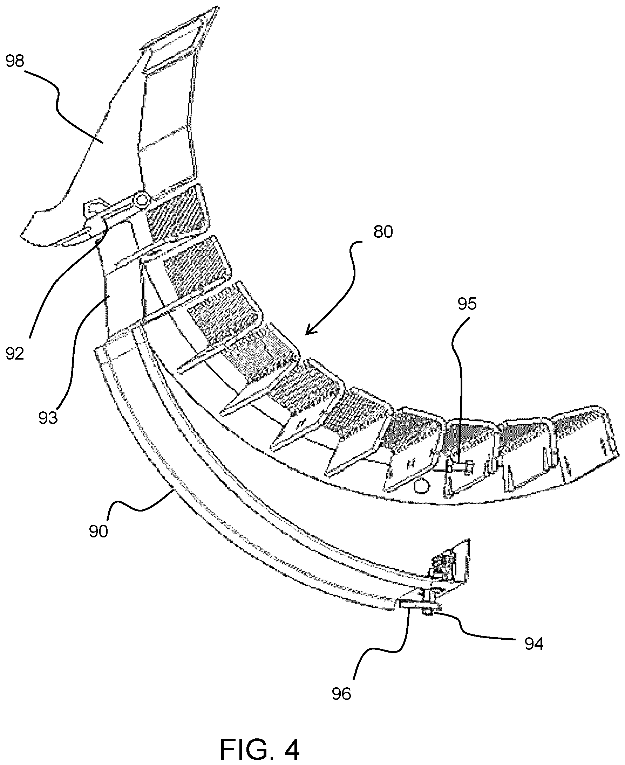

FIG. 4 shows the cover in the process of being fitted or removed. It also shows that the latch 94 engages with a latch bolt 95 which is fixed to the separator grate 80. This latch bolt may instead be mounted to the concave.

This provides a slam latch function. To remove the cover, the end at which the latch is mounted opens in a direction away from the rotor, i.e. it opens by pivoting slightly open radially outwardly. The cover can then be slid out from its engagement with the mounting bar 92.

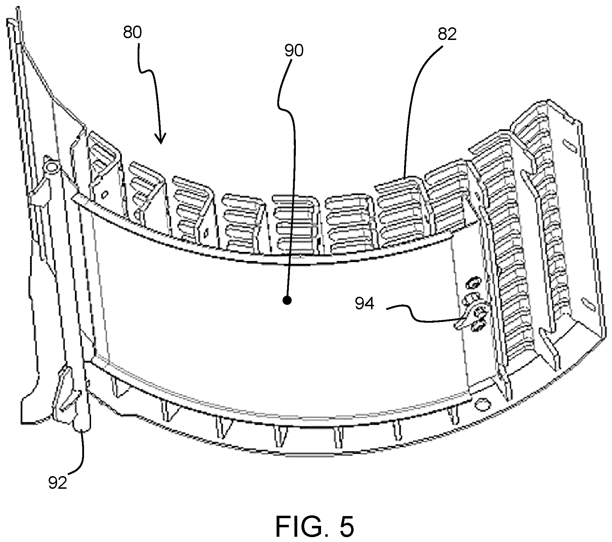

FIG. 5 shows the side of the separator apparatus opposite the rotor. It shows that the cover 90 extends in the tangential i.e., circumferential direction over multiple rows of fingers and it extends in the axial direction along a portion of the length of the separator grate.

There may be a single pivotable cover. Alternatively, there may a line (in the axial direction) of pivotable covers so that the flow to the cleaning apparatus may be blocked by different amounts. By way of example, there may be between 2 and 10 covers per combine, for example 6 covers.

Different sub-sets of covers may be fitted in different positions and different combinations of positions to adjust the crop flow.

The examples above show a single separator grate i.e., concave. However, It should be understood that the concave shown may form one of a set of identical concaves mounted in a juxtaposed relationship underneath a separating rotor so as to interact therewith to deliver a separating action to crop material passed therebetween. Relative terms such as 'radial', 'axial', 'tangential" and "circumferential' used hereinafter are made with general reference to the rotation axis of the threshing rotor under which the concave is to be installed during operation.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

Any reference signs in the claims should not be construed as limiting the scope.

## Claims

1. A grain processing apparatus (40) for a combine harvester, comprising:
a threshing system (20);
a separating system (30) downstream of the threshing system, wherein the separating system comprises a rotor and a separator grate, wherein the separating system further comprises:
a cover (90) against the separator grate, at a side of the separator grate opposite to the rotor, wherein the cover is a slide fit to a support at one end and has a locking arrangement (94) at the other end, such that the cover can be locked in position against the separator grate or unlocked and removed.

2. The grain processing apparatus of claim 1, wherein the locking arrangement (90) comprises a latch.

3. The grain processing apparatus of claim 1, wherein the threshing system (20) and the separating system comprise an axial flow system.

4. The grain processing apparatus of claim 1, wherein the threshing system (20) comprises at least one tangential flow rotor and associated concave.

5. The grain processing apparatus of claim 4, wherein the separating system (30) comprises an axial flow rotor.

6. The grain processing apparatus of any one of claims 1 to 8, further comprising a return pan for receiving harvested crop material from the separating system and for delivering the harvested crop material to a grain cleaning system, wherein the grain cleaning system comprises:
a stratification pan (42) for receiving the harvested crop material from a front end of the return pan and from the threshing system;
a sieve arrangement (54,56) for receiving the harvested crop material from a rear end of the stratification pan; and
a fan (52) for providing an air flow to an area between a rear end of the stratification pan and the sieve arrangement.

7. The grain processing apparatus of claim 6, wherein the sieve arrangement comprises:
a chaffer sieve (54) for conveying harvested crop material in a generally rearward direction; and
a lower sieve (56),
and wherein the grain cleaning apparatus (40) comprises a clean grain chute (70) below the lower sieve.

8. The grain processing apparatus of claim 7, wherein the grain cleaning system further comprises a second chute (60) for directing tailings to a tailings collection trough.

9. The grain processing apparatus of any one of claims 6 to 8, wherein the grain cleaning system further comprises a cascade pan (46) between the stratification pan (42) and the sieve arrangement (54, 56).

10. A combine harvester comprising:
a crop cutting head (11); and
the grain processing apparatus (40) of any one of claims 1 to 9 for receiving the cut crop material.
